# EUROPÄISCHE PATENTSCHRIFT

(11) **EP 3 041 062 B1**
(45) Veröffentlichungstag und Bekanntmachung des Hinweises auf die Patenterteilung: **01.08.2018**
(21) Anmeldenummer: 14004430.6
(22) Anmeldetag: 29.12.2014
(51) Int. Cl.: H01M 2/02, H01M 2/22, H01M 10/04, H01M 10/052

(54) **ELEKTROCHEMISCHE ZELLE**
ELECTROCHEMICAL CELL
CELLULE ÉLECTROCHIMIQUE

(43) Veröffentlichungstag der Anmeldung: 06.07.2016
(73) Patentinhaber: Wyon AG, 9050 Appenzell Steinegg (CH)
(72) Erfinder: Wyser, Paul Julian, 9050 Appenzell (CH); Wyser, Philipp, 9050 Appenzell (CH)
(74) Vertreter: Keller & Partner Patentanwälte AG

(56) Entgegenhaltungen:
- DE-C1- 4 218 381
- US-A1- 2012 156 547

## Beschreibung

### Technisches Geblet

Die vorliegende Erfindung betrifft eine elektrochemische Zelle mit einem geschichteten Elektrodenaufbau. Sie betrifft weiter Verfahren zur Herstellung einer elektrochemischen Zelle mit geschichtetem Elektrodenaufbau, sowie die Verwendung der besagten Zelle, alles gemäss den Oberbegriffen der unabhängigen Ansprüche.

### Stand der Technik

Elektrochemische Zellen dienen der Umwandlung von chemischer in elektrische Energie. Elektrochemische Zellen werden unter anderem als Batterien verwendet, um elektrische Verbraucher unabhängig von einem Stromnetz über einen gewissen Zeitraum zu betreiben. Für kleine tragbare oder stationäre Geräte, wie zum Beispiel Hörgeräte, mit einem hohen Energiebedarf werden Zink/Luft-Primärzellen in Knopfzellenform verwendet. Im Mittel müssen diese Batterien alle fünf bis zehn Tage ersetzt werden. Besonders für Batterien, die für Hörgeräte oder Implantate vorgesehen sind, spielt die Grösse eine entscheidende Rolle. Üblicherweise sind solche Batterien als Knopfzellen ausgestaltet. Die in der Regel zylinderförmigen flachen "knopfförmigen" Batterien werden auch in Uhren, Taschenlampen, Kameras, Thermometern etc. verwendet. Neben der bereits erwähnten Zink/Luft-Primärzelle können Knopfzellen als Lithium-lonen- oder Zink/Silberoxid-Batterie ausgestaltet sein.

Die Elektroden bei kleinen für die Miniaturisierung geeigneten Batterien sind oftmals geschichtet, wobei sich positive und negative Elektroden im Schichtaufbau abwechseln. Ein Beispiel für eine Batterie im Wickelaufbau ist in der US 7,294,430 B2 (Wyon AG, CH) gezeigt. Dort wird eine gewickelte Elektrodenanordnung gezeigt, welche durch eine sich durch das gesamte Gehäuse erstreckende Stiftstruktur abgeleitet wird. Grundsätzlich beabsichtigt die gezeigte Batterie, das verfügbare aktive Volumen, das heisst den Innenraum der Zelle, möglichst effizient auszunutzen.

Die US 2015/156547 A1 (Chieh Chi Chen) offenbart ebenfalls eine elektrochemische Batterie mit Schichtaufbau. Ein Hohlkörper mit einem kreisrunden Querschnitt bildet einen ersten Ableiter und ein in einem Zentrum des Hohlkörpers angeordneter Stift bildet einen zweiten Ableiter. Die Batterie umfasst erste und zweite Elektrodenschichten, die parallel aufgebaut sind und einen rechten Winkel zum zweiten Ableiter aufweisen. Die Elektrodenschichten sind jeweils mit einer Isolationsschicht voneinander getrennt. Die erste Elektrodenschicht steht in Kontakt mit dem ersten Ableiter und die zweite Elektrodenschicht steht in Kontakt mit dem zweiten Ableiter.

Die WO 2014/072494 A1 (Varta Microbattery GmbH) zeigt ebenfalls eine Knopfzelle mit Elektrodenwickel. Die Ableitung wird direkt über ein zweigeteiltes Gehäuse bewerkstelligt, bei welchem die jeweils gegenpoligen Gehäuseteile voneinander elektrisch getrennt sind. Um Platz zu sparen sind die inneren Stromableiter durch Umklappen auf der Eisenseite der Elektrodenwickel abgelegt. Wird nun bei der Elektrolytzugabe der Wickel geschwellt, findet ein Klemmvorgang statt. Damit kann in diesem Dokument auf ein Verschweissen der Ableiter mit dem entsprechenden Gehäusehauptteil verzichtet werden. Die inneren Ableiter sind allerdings platzraubend, und es geht wertvolles aktives Volumen verloren.

Ausserdem ist der Wickelaufbau bei Baugrössen unter einem gewissen Mass wegen des durch die Wickel resultierenden Verlustes an aktivem Volumen nachteilig.

Grundsätzlich besteht ein Bedürfnis nach elektrochemischen Zellen, welche ein möglichst grosses aktives Volumen aufweisen, das heisst möglichst das gesamte zur Verfügung stehende Innenvolumen mit aktivem Material nutzen. Bevorzugt sollte eine Batterie auch für besonders kleine Bauhöhen geeignet sein, um in Implantaten, Hörgeräten, Insulinabgabevorrichtungen und Ähnlichem verbaut werden zu können.

Es ist somit eine Aufgabe der vorliegenden Erfindung, mindestens einen Nachteil des Bekannten zu überwinden. Insbesondere soll eine elektrochemische Zelle bereitgestellt werden, die eine möglichst hohe Energiedichte aufweist, respektive einen möglichst hohen Anteil an aktivem Volumen aufweist, welche zugleich effizient und zuverlässig herstellbar ist. Insbesondere soll auch ein Verfahren zur Herstellung einer elektrochemischen Zelle bereitgestellt werden, welches eine eingangs genannte elektrochemische Zelle kostengünstig und effizient herstellen kann.

### Darstellung der Erfindung

Die Lösung mindestens einer der genannten Aufgaben ist durch den kennzeichnenden Teil der unabhängigen Ansprüche definiert.

Ein Aspekt der vorliegenden Erfindung betrifft eine elektrochemische Zelle im geschichteten Elektrodenaufbau.

In einer besonderen Ausführungsform handelt es sich hierbei um eine Knopfzelle, wie eingangs geschildert. Grundsätzlich weist eine Knopfzelle eine flache, knopfförmige Form auf und hat einen Durchmesser von zwischen 5 und 50 mm, bei Dicken von zwischen 1 und 5 mm. Grundsätzlich kann die erfindungsgemässe elektrochemische Zelle aber auch eine von der Knopfzellenform abweichende Batterie sein. Alternative Bauformen, wie zum Beispiel hufeisen- oder torusförmige Batterien können in bestimmten Implantaten oder besonderen medizinischen Geräten Verwendung finden. Die erfindungsgemässe elektrochemische Zelle weist einen geschichteten Elektrodenaufbau aus, wobei gegensätzlich gepolte Elektrodenschichten jeweils mit Separatorschichten physisch voneinander getrennt angeordnet sind. Diese Anordnung kann als Schichtaufbau verstanden werden, bei dem sich gegenseitig gepolte Elektrodenschichten mit dazwischen gelagerten Separatorschichten abwechselnd übereinander schichten.

Die erfindungsgemässe elektrochemische Zelle umfasst weiter ein erstes Gehäuseteil, welches ein Innenvolumen definiert und zugleich so ausgestaltet ist, dass es einen Ableiter für einen ersten Elektrodenpol bildet.

Die erfindungsgemässe Zelle umfasst weiter einen Stift, welcher sich von aussen in das Innenvolumen erstreckt und so ausgestaltet ist, dass er einen Ableiter für einen zweiten Elektrodenpol bildet. Die Zelle umfasst weiter eine Isolation, welche das erste Gehäuseteil vom Stift elektrisch isoliert. Die Elektrodenschichten sind im Innenvolumen mit ihren entsprechenden Ableitern so angeordnet, dass sie physischen Kontakt haben und dass eine mechanische Spannung zwischen den Elektrodenschichten und dem entsprechenden Ableiter besteht.

Bei der elektrochemischen Zelle der vorliegenden Erfindung kann es sich sowohl um eine Sekundär-als auch um eine Primärzelle handeln.

Im Sinne der vorliegenden Erfindung ist der Pluspol zum Beispiel der Gegenpol zum Minuspol und umgekehrt, Für die Ausführung der vorliegenden Erfindung ist allerdings die Polarität der entsprechenden Elektroden in der erfindungsgemässen Architektur von untergeordneter Bedeutung. Das heisst, im Sinne der vorliegenden Erfindung kann sowohl die Kathode als auch die Anode mit dem ersten Gehäuseteil als Ableiter physisch kontaktiert werden. Entscheidend ist lediglich, dass eine mechanische Spannung zwischen den Elektrodenschichten und ihrem Jeweiligen, einer bestimmten Polarität zugeordneten Ableiter besteht.

Im Sinne der vorliegenden Erfindung ist "Aussen" in Relation zum Innenvolumen der Batterie zu verstehen, welches wiederum durch ein Volumen definiert wird, welches durch die Form des ersten Gehäuseteils bestimmt ist. In einer besonderen Ausführungsform hat daher das erste Gehäuseteil eine im Wesentlichen becherförmige Form. In diesem Beispiel ist das Innenvolumen als das Bechervolumen definiert. Aussen an der elektrochemischen Zelle ist daher alles, was bei einer fertigmontierten und versiegelten Zelle durch eine Gehäusewand oder einen Deckel dringen müsste, um in das Innenvolumen zu gelangen.

In einer besonderen Ausführungsform bilden die Ableiter gleichzeitig die Pole der elektrochemischen Zelle. Grundsätzlich heisst das, dass je ein Ableiter für den positiven Pol und je ein Ableiter für den negativen Pol vorhanden sind.

Eine mechanische Spannung, wie sie die erfindungsgemässe elektrochemische Zelle aufweist, ist eine bei der Fertigung eingebrachte Spannung. Diese kann dadurch erzeugt werden, dass an den betroffenen Bauteilen Komponenten vorgesehen sind, die bei der Montage einem Verformungsprozess unterliegen. Die mechanische Spannung kann in diesem Fall daher rühren, dass die entsprechenden Komponenten in ihre ursprüngliche Form zurückkehren bei Wegfall der mechanischen Spannung.

In einer besonderen Ausführungsform sind diese Komponenten aus einem Material, welches über die entsprechenden elastischen Eigenschaften verfügt.

Durch die mechanische Vorspannung ist eine besonders platzsparende Kontaktierung der Elektroden mit ihren jeweiligen Ableitern möglich. Durch diese Anordnung kann auf zusätzliche Ableiterfahnen im Innenvolumen der elektrochemischen Zelle verzichtet werden. Die Kontaktierung der Elektroden mit ihren Ableitern findet direkt statt.

An den Elektrodenschichten sind Laschen ausgebildet, welche die Flächenausdehnung des Innenvolumens überragen. Bevorzugt überragen sie die Flächenausdehnung des Innenvolumens in Richtung des jeweiligen Ableiters, mit dem die entsprechende Elektrodenschicht physischen Kontakt hat. In diesem Sinne sei als die Flächenausdehnung des Innenvolumens die Flächenausdehnung verstanden, welche in der gleichen Ebene ist wie die Elektrodenschichten. Erfindungsgemäß ist ist eine Verformung der an den Elektrodenschichten ausgebildeten Laschen im montierten Zustand für die genannte mechanische Spannung verantwortlich. Die Laschen können aus einem Material gefertigt sein, welches über die erforderliche Elastizität verfügt, um unter Krafteinwirkung bei der Montage seine Form zu verändern und eine entsprechende mechanische Spannung bezüglich des Ableiters zu erzeugen. Materialien, welche diese elastische Verformbarkeit aufweisen, können unter anderem Metalle, Metalllegierungen und/oder Kunststoffe sein. In einer besonders bevorzugten Ausführungsform bestehen diese Laschen aus einem Trägermaterial für die Elektroden. So kann beispielsweise eine Lasche einer Anodenschicht aus einer Verlängerung eines Kupferträgers in der Flächenausdehnung hin zum jeweiligen Ableiter ausgestaltet sein. Analog kann für die Kathode die Lasche aus einer Verlängerung eines Aluminiumträgers der Elektrode hin zum entsprechenden Ableiter gebildet sein.

Die Elektroden können mit allen gängigen Beschichtungen versehen sein, die vom Fachmann bezüglich des beabsichtigten Verwendungszwecks ausgewählt werden können. Gängige Elektrodenmaterialien sind Lithium-Kobalt-Oxid (LiCo0₂), Lithium-Mangan-Oxid (LiMn₂,O₄), Lithium-Eisen-Phosphat (LiFePO₄), Lithium-Nickel-Mangan-Kobalt-Oxid (LiNiMnCoO₂), oder Lithium-Nickel-Kobalt-Aluminium-Oxid (LiNiCoAlO₂). In einer besonderen Ausführungsform sind die Laschen selbst elektrodenmaterialfrei, bevorzugt wurde das Elektrodenmaterial mittels Laser abladiert. In einer besonderen Ausführungsform weist die Flächenausdehnung des Innenvolumens einen Durchmesser D auf, der zugleich einen Innendurchmesser des Innenvolumens bildet. Eine erste Elektrode steht mit dem ersten Gehäuseteil als Ableiter physisch in Kontakt und weist einen Aussendurchmesser D_{L} auf, welcher grösser ist als der Innendurchmesser D. Durch diesen Überhang findet beim Platzieren der Elektrodenschicht im Innenvolumen der elektrochemischen Zelle eine Deformation des äusseren Rands der Elektrodenschicht statt, und eine mechanische Vorspannung wird erzeugt, welche eine sichere und konstante Kontaktierung der Elektrodenschicht mit ihrem jeweiligen Ableiter, in diesem Fall der Gehäusewand, sicherstellt. Bevorzugt ist der Aussendurchmesser der Elektrodenschicht um 0,02 bis 1,5 mm grösser als der Innendurchmesser. Besonders bevorzugt ist der Aussendurchmesser der Elektrodenschicht um 0,04 bis 0,1 mm grösser als der Innendurchmesser des Innenvolumens.

Diese Ausführungsform bezieht sich auf im Wesentlichen kreisrund ausgestaltete elektrochemische Zellen in Knopfzellenform. Bei Formen, welche von dieser Knopfzellenform abweichen, ist entscheidend, dass die Flächenausdehnung der Elektrodenschicht grösser Ist als die Flächenausdehnung eines Innenvolumens in der gleichen Ebene wie die Elektrodenschicht. Grundsätzlich kann der Aussendurchmesser den Innendurchmesser um einen gewissen Prozentsatz übersteigen. Vorzugsweise ist der Aussendurchmesser der Elektrodenschicht um zwischen 0,45 und 2,5 % grösser als der Innendurchmesser des Gehäuseteils. Besonders bevorzugt ist der Aussendurchmesser der Elektrodenschicht zwischen 0,5 und 1 % grösser als der Innendurchmesser des Gehäuseteils.

In einer besonderen Ausführungsform endet eine Beschichtung einer Elektrodenschicht auf einem Aussendurchmesser, welcher geringer ist als der Aussendurchmesser der Elektrodenschicht. Bevorzugt ist somit eine Lasche, welche durch die Elektrodenschicht gebildet ist, nicht beschichtet.

In einer besonderen Ausführungsform endet die Beschichtung auf einem Durchmesser D_{b}, welcher kleiner ist als der Innendurchmesser D des Gehäuseteils. Besonders bevorzugt endet die Beschichtung auf einem Durchmesser, welcher um zwischen 0,05 bis 0,5 mm kleiner ist als der Innendurchmesser des Gehäuseteils. Besonders bevorzugt endet der zweite Durchmesser D_{b} auf einem Durchmesser, welcher um zwischen 0,1 und 0,3 mm kleiner ist als der Innendurchmesser D des Gehäuseteils. Somit entsteht im Falle einer runden elektrochemischen Zelle analog der oben beschriebenen Ausführungsform ein insgesamt nicht beschichteter Aussenumfang einer Elektrodenschicht, welcher sich wie ein Rand um diese erstreckt. Dieser Rand bildet unter anderem die Lasche, welche in der Lage ist, die Elektrodenschicht mit ihrem Ableiter, das heisst dem Gehäuseteil, mechanisch vorzuspannen. Bevorzugt ist diese Lasche als Band im Umfang einer Elektrodenschicht mit einer Breite von zwischen 0,15 und 0,4 mm ausgestaltet.

In einer besonderen Ausführungsform beträgt dieses Band insgesamt zwischen 0,5 und 2,2 % des Aussendurchmessers der Elektrodenschicht.

In einer besonderen Ausführungsform ist der Stift als zentraler Ableiterschaft ausgestaltet. Insbesondere bei kreisförmigen Knopfzellen verläuft dann der zentrale Ableiterschaft in Längsrichtung durch den Mittelpunkt des Kreises der kreisförmigen Knopfzelle,

In einer besonderen Ausführungsform ist der zentrale Ableiterschaft so ausgestaltet, dass er sich durch Ausnehmungen sämtlicher Elektrodenschichten des gesamten Innenvolumens erstreckt. Im Falle einer kreisförmigen Knopfzelle sind die Elektrodenschichten ebenfalls kreisförmig ausgelegt. Um den zentralen Ableiterschaft zu akkommodieren, verfügen die kreisförmigen Elektrodenschichten über entsprechend proportionierte Ausnehmungen um ihren Mittelpunkt. Übereinander bilden die Schichten somit ein Leervolumen, welches den zentralen Ableiterschaft aufnehmen kann. Idealerweise sind Elektrodenschichten einer bestimmten Polarität in dieser Ausführungsform so ausgestaltet, dass sie den zentralen Ableiterschaft physisch kontaktieren. Bevorzugt sind die Elektrodenschichten der gegensätzlichen Polarität so ausgestaltet, dass sie vom zentralen Ableiterschaft beabstandet sind.

In einer besonders bevorzugten Ausführungsform beträgt dieser Abstand mindestens 0,1 mm, vorzugsweise mindestens 0,2 mm, besonders bevorzugt mindestens 0,23 mm.

In einer besonderen Ausführungsform umfasst eine erste Elektrodenschicht eine erste Ausnehmung. Durch diese Ausnehmung erstreckt sich, insbesondere senkrecht, der Stift. Die erste Ausnehmung hat einen ersten Durchmesser, der grösser ist als der Aussendurchmesser des Stiftes. Hierbei und im Folgenden sei der Aussendurchmesser des Stiftes als der Durchmesser verstanden, der in der Flächenausdehnung, in welcher sich die betreffende Elektrodenschicht befindet, eine Schnittebene durch den Stift definiert. In diesem vorliegenden Beispiel wäre diese Schnittebene und somit der Aussendurchmesser in einer senkrecht zur Längenausdehnung des Stiftes verlaufenden Ebene zu betrachten. Bevorzugt ist dieser erste Durchmesser um zwischen 0,2 und 1,6 mm grösser als der Aussendurchmesser des Stiftes, besonders bevorzugt ist dieser erste Durchmesser um zwischen 0,4 bis 0,8 mm grösser als der Aussendurchmesser des Stiftes. Besonders bevorzugt ist der Aussendurchmesser der Ausnehmung um 50 bis 100 % grösser als der Aussendurchmesser des Stiftes in der besagten Schnittebene.

In einer besonderen Ausführungsform steht eine zweite Elektrodenschicht mit dem Stift als Ableiter physisch in Kontakt. Besagte zweite Elektrodenschicht weist eine zweite Ausnehmung auf, durch welche sich der Stift auf eine ähnliche Weise erstreckt, wie das in der oben genannten Ausführungsform geschildert ist. Diese zweite Ausnehmung weist einen zweiten Durchmesser auf, wobei dieser zweite Durchmesser kleiner ist als der Aussendurchmesser des Stiftes. Bevorzugt ist dieser zweite Durchmesser um zwischen 0,25 und 3 mm kleiner als der Aussendurchmesser des Stiftes. Besonders bevorzugt ist der zweite Durchmesser der zweiten Ausnehmung um 0,05 bis 0,15 mm kleiner als der Aussendurchmesser des Stiftes, Dies kann im montierten Zustand dazu führen, dass wenn der Stift in die entsprechende Ausnehmung geschoben wird, alle Elektrodenschichten einer bestimmten Polarität vom Stift um diesen Grössenunterschied, um den ihre Ausnehmungen kleiner sind als der Aussendurchmesser des Stiftes, verschoben werden. Dadurch entsteht ein physischer Kontakt zwischen diesen Elektrodenschichten und dem Stift.

In einer besonderen Ausführungsform ist durch den Grössenunterschied der Elektrodenschicht mit dem kleineren Durchmesser der Ausnehmung als den Durchmesser des Stiftes eine Lasche ausgebildet, durch welche diese zweite Elektrodenschicht einen elektrisch leitenden Kontakt mit dem Stift sicherstellt.

In einer besonderen Ausführungsform ist eine Elektrodenschicht von einer Separatorschicht im Wesentlichen umschlossen. Im Sinne der vorliegenden Anmeldung sei "im Wesentlichen umschlossen" so zu verstehen, als dass durch das Umsohliessen die Elektrodenschicht von der gegensätzlich gepolten Elektrodenschicht ausreichend isoliert Ist, um einen Kurzschluss zu verhindern. Insbesondere Ist eine Kathodenschicht zwischen zwei miteinander verschweissten Separatorschichten angeordnet. Dabei können die Separatorschichten wie ein Beutel ausgestaltet sein, in dem die Kathodenschicht aufgenommen werden kann. Bevorzugt sind die Separatorschichten, welche eine Kathodenschicht im Wesentlichen umschliessen, stoffschlüssig miteinander verbunden. Die Separatorschichten können so angeordnet sein, dass sie auf einer dem entsprechenden Ableiter einer bestimmten Polarität der betreffenden Elektrodenschicht zugewandten Seite offen sind, während sie der abgewandten Seite, das heisst hinsichtlich des Ableiters der gegensätzlichen Polarität zugewandten Seite, verschlossen sind. Eine stoffschlüssige Verbindung zwischen zwei Separatorschichten kann durch ein Verschweissen der Separatorschichten bewerkstelligt werden. Dieses Verschweissen kann als kontinuierliche Schweissnaht um einen überhängenden Bord der Separatorschichten bewerkstelligt werden, oder über punktuelle Schweissnähte. Solche verschweissten Separatorschichten sind zum Beispiel in der EP 2 706 592 A1 gezeigt. Vorzugsweise bestehen die Separatorschichten aus ionenleitender Folie.

In einer besonderen Ausführungsform sind die Elektrodenschichten im Gehäuseteil so angeordnet, dass sie eine mechanische Vorspannung bezüglich ihrer jeweiligen Ableiter aufweisen.

In einer besonderen Ausführungsform weist die erfindungsgemässe elektrochemische Zelle weiter einen Gehäusedeckel mit einer Ausnehmung zur Aufnahme des Stiftes auf. Dieser ist so ausgestaltet, dass der Stift sich von aussen in das Innenvolumen der elektrochemischen Zelle erstrecken kann.

In einer besonderen Ausführungsform bildet der aussenliegende Teil des Stiftes einen Ableiterpol der fertig verschlossenen Batterie. Die elektrochemische Zelle umfasst in dieser Ausführungsform weiter mindestens eine Dichtung zwischen dem Gehäuseteil und dem Gehäusedeckel und/oder dem Gehäusedeckel und dem Stift. Diese Dichtung versiegelt die elektrochemische Zelle gegen aussen. Bevorzugt wird die elektrochemische Zelle gasdicht versiegelt. Besonders bevorzugt umfasst diese Dichtung eine Glasdichtung. Alternativ kann diese Dichtung auch als Dichtungsring aus Kunststoff gefertigt sein. Alternativ kann die Dichtung eine Metalloxydschicht, insbesondere eine keramische Metalloxidschicht wie zum Beispiel Al₂O₃ umfassen.

In einer besonders bevorzugten Ausführungsform ist diese Dichtung zwischen dem Gehäusedeckel und dem Stift angebracht. Sie isoliert diese beiden Elemente zueinander. Durch den Aufbau der erfindungsgemässen elektrochemischen Zelle ist es möglich, den Dichtungsring vergleichsweise klein auszugestalten, nämlich rund um den zentralen Ableiterstift. Im Stand der Technik sind die Dichtungsringe in der Regel zwischen dem Gehäuseteil und dem Gehäusedeckel und somit vergleichsweise grösser im Durchmesser als die eng anliegenden Dichtungsringe, welche gemäss der vorliegenden Erfindung möglich sind. Dadurch können weiter der Batterieaufbau und die Ausnutzung des aktiven Volumens verbessert werden. Das Gehäuseteil und der Gehäusedeckel können in der vorliegenden Ausführungsform stoffschlüssig verbunden sein, insbesondere verschweisst sein.

In einer besonderen Ausführungsform umfasst der Stift einen Flansch. Die Ausnehmung des Gehäusedeckels ist dann so ausgestaltet, dass zwischen dem Flansch und dem Gehäusedeckel ein Formschluss besteht. Im montierten Zustand verhindert der Flansch, dass der Stift aus der Batterie heraus kann, In der Vormontage ist es so unter anderem möglich, die Batterie mit einer mechanischen Vorspannung zu verbauen. Dazu wird ein dem Gehäusedeckel gegenüberliegender Boden mit einer konkaven Bodenfläche oder einer zentralen Erhebung versehen. Stift und Gehäusedeckel werden vormontiert, indem der Stift mit dem Flansch in formschlüssigem Kontakt zur Ausnehmung mit einer entsprechenden Schulter des Gehäusedeckels gebracht wird. Der Stift mit dem Gehäusedeckel wird nun in das erste Gehäuseteil dergestalt gedrückt, dass eine mechanische Spannung zwischen dem konkaven oder eingebuchteten Gehäuseboden und dem Gehäusedeckel mit Ableiterstift besteht. Die zwischen Gehäuseteil und Gehäusedeckel verschweisste Batterie verfügt dann als versiegelte elektrochemische Zelle über eine mechanische Vorspannung.

In einer besonderen Ausführungsform ist der Stift aus verschiedenen Komponenten zusammengesetzt. Bevorzugt ist der Stift mehrstückig, Der Ableiterstift kann zum Beispiel aus zwei verschiedenen Materialien zusammengesetzt sein, die miteinander verpresst sind. In einer besonders bevorzugten Ausführungform besteht der Stift aus einem ersten Material, welches sich im Innenvolumen der Zelle durch die Ausnehmungen der Elektrodenschichten erstreckt und einem zweiten Material, welches sich vom Innenvolumen durch den Gehäusedeckel nach aussen erstreckt. Die beiden Materialien sind leitend miteinander verbunden. Das zweite Material ist bevorzugt ein lötfähiges Material, besonders bevorzugt ist das zweite Material vergoldetes Kupfer. Das erste Material ist bevorzugt aus dem gleichen Material wie die entsprechend ableitend kontaktierten Elektrodenschichten, also zum Beispiel aus Aluminium oder Kupfer.

In einer besonderen Ausführungsform ist somit ein dem Gehäusedeckel gegenüber angeordneter Gehäuseboden des Gehäuseteils konkav ausgebildet. Im Sinne dieses Merkmals bezieht sich konkav auf die Aussenperspektive auf die erfindungsgemässe elektrochemische Zelle.

In einer besonderen Ausführungsform umfasst die Zelle einen Vliesstoff. Der Vliesstoff kann mit Quelleigenschaften ausgestattet sein, welche sicherstellen, dass nach Elektrolytzugabe eine mechanische Vorspannung im Innenvolumen der elektrochemischen Zelle aufrechterhalten wird. Weiter kann in einer besonderen Ausführungsform der Vliesstoff auf dem Gehäuseboden ausgelegt sein. Dieser Gehäuseboden kann dem Gehäusedeckel gegenüber angeordnet sein. Somit kann der Vliesstoff das Innere der elektrochemischen Zelle, insbesondere den Stift gegenüber dem Gehäuseboden, elektrisch isolieren.

Es versteht sich für einen Fachmann, dass die genannten besonderen Ausführungsformen in einer erfindungsgemässen elektrochemischen Zelle in beliebiger Kombination miteinander verwirklicht sein können, sofern sie sich nicht gegenseitig ausschliessen.

Ein weiterer Aspekt der vorliegenden Erfindung betrifft ein Verfahren zur Herstellung einer elektrochemischen Zelle, insbesondere einer eingangs beschriebenen erfindungsgemässen elektrochemischen Zelle. Dieses Verfahren umfasst den Schritt des abwechselnden Einlegens gegensätzlich gepolter Elektrodenschichten in ein erstes Gehäuseteil, welches ein Innenvolumen der elektrochemischen Zelle definiert. Bevorzugt werden die Elektrodenschichten abwechselnd mit Separatorschichten eingelegt. Das heisst zum Beispiel, dass auf eine Kathodenschicht eine Separatorschicht folgt, worauf wiederum eine Anodenschicht und eine weitere Separatorschicht folgt. Unter diesem Schritt ist es auch möglich, vormontierte Schichtabfolgen in einem einzigen Schritt in das Gehäuseteil einzulegen. Das heisst, die Elektrodenschichten können vorgeschichtet sein.

In einer besonderen Ausführungsform sind die Elektrodenschichten vorgängig zwischen zwei Separatorschichten eingeschweisst. Das erfindungsgemässe Verfahren umfasst weiter den Schritt des Vorspannens einer ersten Elektrodenschicht hinsichtlich der Innenwand des ersten Gehäuseteils. Dieses Vorspannen ist ein mechanisches Vorspannen, welches dadurch stattfindet, dass der Durchmesser dieser Elektrodenschicht grösser ist als der Innendurchmesser des ersten Gehäuseteils. Bevorzugt ist ein unbeschichteter Aussendurchmesser dieser Elektrodenschicht als Lasche ausgebildet, welcher die Innenwand des ersten Gehäuseteils physisch kontaktiert. Das erfindungsgemässe Verfahren umfasst weiter den Schritt des Einfüllens eines Elektrolytmediums. Das erfindungsgemässe Verfahren umfasst weiter den Schritt des Verschliessens der elektrochemischen Zelle mit einem Gehäusedeckel. Dabei wird ein Stift durch eine Ausnehmung des Gehäusedeckels geführt und in das Innenvolumen der elektrochemischen Zelle erstreckt. Dies findet so statt, dass eine Vorspannung zwischen dem Stift und einer zweiten Elektrodenschicht entsteht. Dies wird dadurch gewährleistet, dass die Ausnehmung zur Aufnahme des Stiftes dieser zweiten Elektrodenschicht einen Durchmesser aufweist, der kleiner ist als der Aussendurchmesser des Stiftes. Bevorzugt ist der Durchmesser dieser zweiten Elektrodenschicht, welcher die Ausnehmung umgibt, eine nicht beschichtete Verlängerung der Elektrodenschicht, welche als Lasche ausgebildet ist und den Ableiterstift physisch kontaktiert.

In diesem Dokument wird der Einfachheit halber jeweils von einer Elektrodenschicht geredet, es versteht sich aber für einen Fachmann von selbst, dass damit eine Reihe von übereinander gesteckten Elektrodenschichten gemeint sein kann. Bevorzugt werden zwischen acht und zehn Elektrodenschichten einer bestimmten Polarität, das heisst insgesamt zwischen 16 und 20 Elektrodenschichten, in einer elektrochemischen Zelle wie im oben beschriebenen Verfahren verbaut.

An den Elektrodenschichten sind Laschen ausgebildet, um die Elektrodenschichten, wie oben erwähnt, hinsichtlich ihrer jeweiligen Ableiter zu verspannen.

In einer besonderen Ausführungsform sind die Elektrodenschichten aus Kathoden- und Anodenschichten gebildet. Eine Kathoden- und/oder Anodenschicht wird dabei vorgängig zwischen zwei Separatorschichten eingelegt und die Separatorschichten an mindestens einer Stelle, insbesondere an einer Mehrzahl von Stellen, stoffschlüssig verbunden, insbesondere verschweisst.

In einer besonderen Ausführungsform umfasst das erfindungsgemässe Verfahren weiter den folgenden Schritt: Der Gehäusedeckel und der Stift werden vormontiert, indem ein mit einer Dichtungsmasse beschichteter Dichtungsring an einer Ausnehmung des Gehäusedeckels eingepresst wird und der Stift durch die Ausnehmung geführt wird, so dass er mit einem Flansch des Stiftes an den Dichtungsring angepresst wird.

In einer besonderen Ausführungsform umfasst das erfindungsgemässe Verfahren weiter den Schritt des Einlegens eines Vliesstoffes in das erste Gehäuseteil.

In einer besonderen Ausführungsform wird der Vliesstoff auf einem Gehäuseboden des Gehäuseteils eingelegt, bevor die Elektrodenschichten eingelegt werden.

Es versteht sich für einen Fachmann, dass die vorliegende Erfindung weitere Verfahrensschritte umfassen kann, welche erforderlich sein könnten, um die oben genannten besonderen Ausführungsformen der elektrochemischen Zelle zu verwirklichen.

Ein weiterer Aspekt der vorliegenden Erfindung betrifft die Verwendung einer elektrochemischen Zelle, wie eingangs geschildert, als Batterie in einem Hörgerät. Dabei wird die elektrochemische Zelle direkt auf einer elektrischen Platine des Hörgeräts angebracht. Die Ableiter der elektrochemischen Zelle sind bei der erfindungsgemässen Batterie als integrale Bestandteile des äusseren Gehäuses ausgestaltet. So dient der erste Gehäuseteil als erster Ableiter und der sich vom Innenvolumen nach aussen erstreckende Stift als zweiter Ableiter. Diese können mit Nieten, Lötstellen oder Erhebungen so ausgestaltet sein, dass sie direkt an eine entsprechende Platine zur Energieabgabe befestigt werden können.

Diese Strukturen auf der Gehäuseoberfläche können als Ableiterfahnen für die elektrochemische Zelle von aussen dienen.

Ein weiterer Aspekt der vorliegenden Erfindung betrifft die Verwendung einer erfindungsgemässen elektrochemischen Zelle als Batterie in einem Implantat, insbesondere in einem Herzschrittmacher. Dabei wird die elektrochemische Zelle analog zur oben genannten Verwendung direkt auf eine Platine angebracht.

Sämtliche besondere Ausführungsformen der elektrochemischen Zelle oder des Verfahrens zu dessen Herstellung lassen sich im Rahmen der vorliegenden Erfindung beliebig kombinieren, sofern sie sich nicht gegenseitig ausschliessen.

Im Folgenden wird die Erfindung anhand konkreter Ausführungsbeispiele und Detailbeschreibungen näher erläutert, ohne jedoch auf diese beschränkt zu sein. Im Übrigen ergeben sich aus dieser Detailbeschreibung und der Gesamtheit der Patentansprüche weitere vorteilhafte Ausführungsformen und Merkmalskombinationen der vorliegenden Erfindung.

### Kurze Beschreibung der Zeichnungen

Die zur Erläuterung der Ausführungsbeispiele verwendeten Zeichnungen zeigen schematisch:
Fig. 1 Eine erfindungsgemässe elektrochemische Zelle, welche auf einer Platine montiert ist;
Fig. 2 Eine als Knopfzelle ausgestaltete erfindungsgemässe elektrochemische Zelle im Querschnitt;
Fig. 2A Die physische Kontaktierung des Ableiters mittels Laschen;
Fig. 2B Die physische Kontaktierung des zweiten Ableiters mittels Laschen;
Fig. 2C Die Schweissstelle zwischen Gehäusedeckel und Gehäuseteil;
Fig. 3A Der vormontierte Gehäusedeckel mit dem Stift;
Fig. 3B Der becherförmige Gehäuseteil mit Elektrodenfüllung;
Fig. 4 Eine Anodenschicht mit Laschen am äusseren Umfang;
Fig. 5 Eine Kathodenschicht mit Laschen am inneren Umfang der zentralen Ausnehmung;
Fig. 6 Ein zweiteiliger Ableiterstift.

Grundsätzlich sind in den Figuren die gleichen Teile mit den gleichen Bezugszeichen versehen.

### Wege zur Ausführung der Erfindung

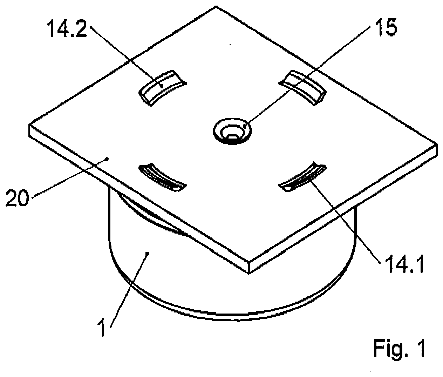

Die Fig. 1 zeigt schematisch eine erfindungsgemässe elektrochemische Zelle von aussen, welche auf eine Platine 20 montiert wurde. Die elektrochemische Zelle 1 ist im Wesentlichen knopfförmig ausgestaltet und verfügt über Ableiterfahnen für die Anode 14.1, 14.2 und Ableiterfahnen für die Kathode 15. Die Ableiterfahnen 14.1, 14.2, 15 sind in diesem Beispiel in vorgefertigte Nieten der Platine eingeführt. Ebenfalls denkbar wäre es allerdings, die Ableiterfahnen 14.1, 14.2, 15 so auszugestalten, dass sie für einen Lötprozess auf der Platine geeignet sind.

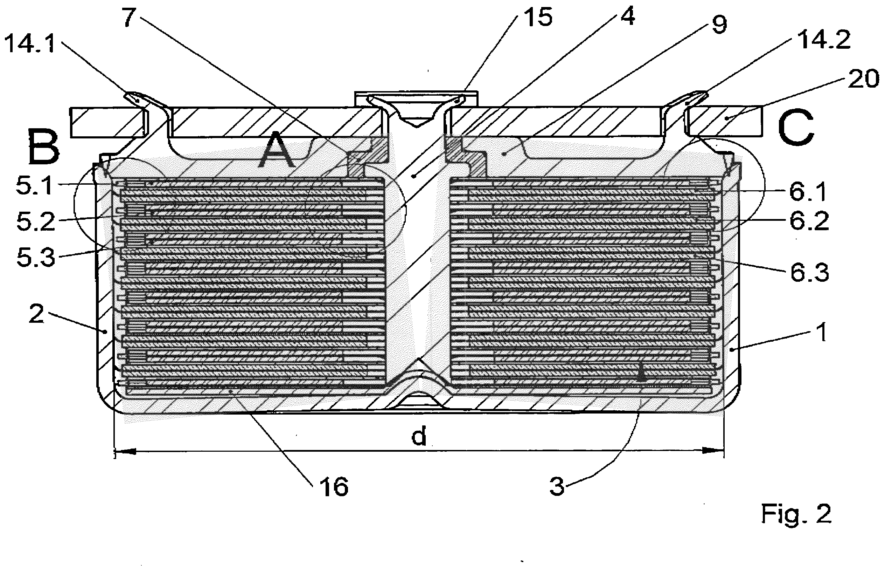

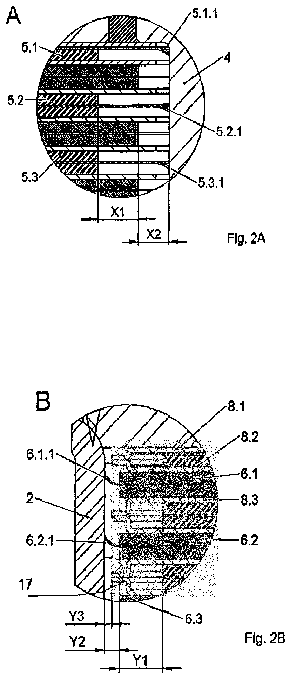

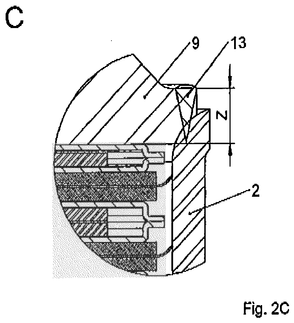

Die Fig. 2 zeigt exemplarisch die auf der Platine 20 angebrachte elektrochemische Zelle 1 im Querschnitt. Die elektrochemische Zelle 1 verfügt über ein im Wesentlichen becherförmiges erstes Gehäuseteil 2 aus Kupfer. Ebenfalls geeignet wären unter anderem vergoldetes Kupfer, rostfreier Stahl oder ein anderes für Glasdurchführungen geeignetes Material, wie zum Beispiel Titan.

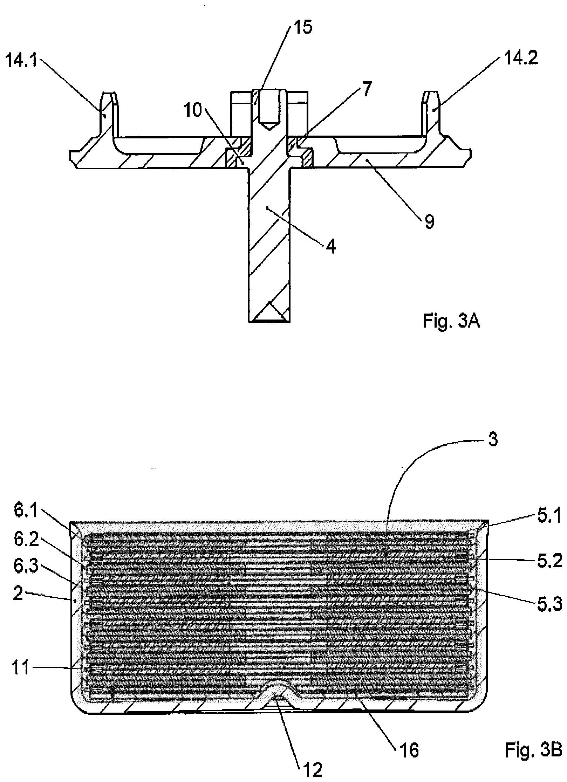

Das Gehäuseteil verfügt über einen Durchmesser D und definiert ein Innenvolumen 3. Der Durchmesser D entspricht dem Durchmesser in der Flächenausdehnung, in welcher sich die Elektrodenschichten befinden, abzüglich der Gehäusedicke des Gehäuseteils 2. Im vorliegenden Beispiel wurde eine Gehäusedicke von 0,2 mm vorgesehen. Der Innendurchmesser D der beispielhaft gezeigten elektrochemischen Zelle beträgt 7,5 mm. Das Gehäuseteil 2 ist mit einem Gehäusedeckel 9 stoffschlüssig verbunden. Eine detailliertere Darstellung dieser stoffschlüssigen Verbindung ist in der Fig. 2C, unten, näher erläutert. Der Gehäusedeckel 9 besteht aus einem mit dem Gehäuseteil kompatiblen Material, im vorliegenden Beispiel ebenfalls aus Kupfer, einem vergoldeten Kupfer oder rostfreiem Stahl. Durch das Gehäuseteil 9 erstreckt sich ein Ableiterstift 4 in das Innenvolumen 3 des Gehäuseteils 2. Der Ableiterstift 4 ist durch eine Ausnehmung des Gehäusedeckels 9 geführt und gegenüber diesem elektrisch isoliert. Dazu ist ein Dichtungsring 7 vorgesehen, welcher mit einer Diohtungsmasse beschichtet ist. Der Dichtungsring 7 wird zunächst in den Gehäusedeckel 9 eingepresst, und anschliessend wird der Ableiterstift 4 in den Dichtungsring 7 eingepresst. Die einstückig aus dem Ablelterstift gebildete Ableiterfahne 15 ragt aus einer entsprechenden Öffnung der Platine heraus und ist zur Fixierung der elektrochemischen Zelle verbogen. Im vormontierten Zustand ist der Ableiterstift 15 allerdings nicht verbogen, was ausführlich in der Fig. 3A, unten, erläutert wird. Der Dichtungsring ist im vorliegenden Beispiel aus einem Polypropylenkunststoff. Alternativ kann der Dichtungsring unter anderem aber auch aus Glas oder einem Polyether-Keton sein. Der Ableiterstift ist im vorliegenden Beispiel aus Aluminium. Ebenfalls geeignet wäre rostfreier Stahl oder ein für Glasdurchführungen geeignetes Material.

In dem Gehäusedeckel 9 gegenüberliegenden Gehäuseboden ist ein Vliesstoff 16 eingelegt. Im vorliegenden Beispiel ist der Vliesstoff ein Polypropylen-Vlies. Ebenfalls geeignet wäre allerdings ein Teflon-Vlies. Dieses Vlies erzeugt eine leichte mechanische Vorspannung für die Elektrodenstacks. Dadurch kann eine kontinuierliche gute lonenleitfähigkeit gewährleistet werden, trotz allfälligem Ausdehnen und Schrumpfen der Stapelhöhen während des Lade-, respektive Entladevorgangs. Das Vlies 16 bildet somit ein Polster mit einem Federeffekt. Als zusätzlichen Vorteil kann der Vliesstoff 16 auch gegenüber dem Gehäuseteil 2 isolieren. Insbesondere kann der Vliesstoff 16 den Ableiterstift 4 hinsichtlich des Gehäuseteils 2 isolieren.

Im Innenvolumen 3 des Gehäuseteils 2 sind abwechselnd Elektrodenschichten stapelweise eingelegt. Dabei wechseln sich Kathodenschichten 5.1, 5.2, 5.3, ... mit Anodenschichten 6.1, 6.2, 6.3, ... ab. Die gegensätzlich gepolten Elektrodenschichten sind mittels Separatorschichten voneinander physisch beabstandet. Die Separatorschichten bestehen aus ionenleitenden Folien. Zusätzlich zu ihrer Funktion als lonenleiter übernehmen sie mechanische Stützfunktionen innerhalb des Batterieaufbaus. Im vorliegenden Beispiel ist jeweils eine Kathodenschicht 5.1, 5.2, 5.3, ... zwischen zwei Separatorschichten verschweisst.

Im gezeigten Beispiel hat der Ableiterstift einen Aussendurchmesser von 0,7 mm. Die Partien B, C und D sind in den folgenden Fig. 2A, 2B und 2C nochmals in einer grösseren Detaillierung gezeigt.

Die Figur 2A illustriert schematisch die Kontaktierung der Kathodenschichten 5.1, 5.2, 5.3, ... der Fig. 2. Diese Elektrodenschichten kontaktieren den Ableiterstift 4. An ihren, dem Ableiterstift zugewandten Enden, sind Laschen 5.11, 5.21, 5.31 vorgesehen, welche insgesamt in ihrer Ausdehnung sich soweit erstrecken, dass sie vom Ableiterstift 4 verschoben werden. Somit entsteht zwischen den Kathodenschichten 5 und dem Ableiterstift 4 eine mechanische Vorspannung. Dabei ist der beschichtete Teil der Kathoden 5 vom Ableiterstift weiter beabstandet. Lediglich das Trägermaterial ist als Lasche und Verlängerung der Elektrodenschicht ausgebildet. Insgesamt ist im vorliegenden Beispiel der beschichtete Teil um 0,53 mm vom Ableiterstift beabstandet. Somit besteht ein Offset, das heisst ein Abstand, zwischen dem beschichteten Teil der Kathode 5 und dem beschichteten Teil der Anoden von 0,3 mm. Die Anoden selbst sind ebenfalls vom Ableiterstift beabstandet, nämlich mit ihrem beschichteten Teil um 0,23 mm.

Die Fig. 2B illustriert die physische Kontaktierung der Anodenschichten mit dem Gehäuseteil 2 der Fig. 2. Ebenfalls gut aus dieser Figur ersichtlich sind die Separatorschichten 8.1, 8.2, 8.3 ..., welche die Kathodenschichten im Wesentlichen umgeben. Diese Enden der Separatorenschichten 8 sind verschweisst.

Auch die Anodenschichten 6.1, 6.2, 6.3, ... sind von ihrem Ableiter, dem Gehäuseteil 2, beabstandet. Im vorliegenden Fall beträgt der Abstand Y2 0,1 mm. Der Abstand der Separatorenschichten Z zur Gehäuseinnenwand des Gehäuseteils 2 beträgt 0,05 mm. An den Anodenschichten 6.1, 6.2, ... sind Laschen 6.1.1, 6.2.1, ... ausgebildet, welche die physische Kontaktierung der Gehäuseinnenwand 17 des Gehäuseteils 2 sicherstellen und eine mechanische Vorspannung zwischen diesen Teilen garantieren.

Im vorliegenden Beispiel umfassen die Anodenschichten 6.1, 6.2, ... einen Kupferträger, der beidseitig beschichtet ist. Aber auch eine einseitige Beschichtung wäre für die Durchführung der erfindungsgemässen Lehre geeignet. Im vorliegenden Beispiel ist die beispielhaft gezeigte Kathodenschicht 5.1, 5,2, 5,3, ... ein beidseitig beschichteter Aluminiumträger.

Durch die Beabstandungen und die Offsets zwischen den Elektrodenschichten gegensätzlicher Polarität wird die Gefahr einer Dendritbildung und somit von Kurzschlüssen minimiert.

In der Fig. 2C wird die Schweissnaht 13 zwischen dem Gehäusedeckel 9 und dem Gehäuseteil 2 detailliert dargesteilt. Insgesamt weist der Gehäusedeckel 9 eine Dicke von 0,3 mm im vorliegenden Beispiel auf. Zur Verschweissung des Gehäusedeckels 9 und des Gehäuseteils 2 kann eine radiale Laserschweissung verwendet werden. Durch diesen Schweissprozess Ist das Gehäuseteil 2 mit dem Gehäusedeckel 9 gasdicht verschweisst.

Die Fig. 3A zeigt einen vormontierten Gehäusedeckel 9 mit dem bereits mittels des Dichtungsringes 7 verbundenen Ableiterstift 4. Die Ableiterfahnen 15 des Ableiterstifts 4 sind im vorliegenden Fall allerdings noch nicht verbogen. Ebenfalls ersichtlich sind die am Gehäusedeckel angebrachten Ableiterfahnen 14.1., 14.2, welche als Ableiter des Gehäuseteils 2 im montierten Zustand dienen. Ein am Ableiterstift ausgebildeter Flansch 10 arretiert den Ableiterstift gegen eine entsprechend ausgebildete Schulter des Gehäusedeckels 9 und verbessert somit die Dichtung.

Das in der Fig. 3A gezeigte Element wird als vormontiertes Teil in das in der Fig. 3B gezeigte Element eingeführt. In der Fig. 3B ersichtlich ist ein Gehäuseteil 2, in das ein Polypropylen-Vliesstoff 16 auf den Gehäuseboden 11 eingelegt wurde. Zusätzlich zum Vlies kann eine zusätzliche Isolationsfolie eingebracht Anschliessend werden abwechslungsweise Anoden 6.1, 6.2, 6.3 ... und die in Separatoren eingeschweissten Kathoden 5.1, 5.2, 5.3, ... eingelegt. Die im Durchmesser d grösseren Laschen der Anoden werden an der Innenwand des Gehäuseteils 2 für eine gute Kontaktierung vorgespannt. Dank der Separatorenverschweissung sind die Kathoden mechanisch stabil und werden an der Innenwand des Gehäuseteils 2 zentriert, sodass im Zentrum eine gemeinsame Ausnehmung zur Aufnahme des Ableiterstifts entsteht.

Der entsprechende Elektrolyt kann in einer Glove Box oder in einem Trockenraum in diese Ausnehmung eingefüllt werden. Anschliessend kann der Elektrolyt während einer Tränkzeit sich in die aktiven Komponenten verteilen. Die Kathoden wurden in einem vorgängigen Arbeitsschritt verschweisst. Dazu wurden Kathoden jeweils zwischen zwei vorgestanzte Separatorbänder eingelegt und partiell am Umfang verschweisst und im Anschluss ausgestanzt oder ausgeschnitten. Insgesamt hat es sich als vorteilhaft erwiesen, die Kathoden und Anoden mit einem Laser aus beschichteten Bändern auszuschneiden. Die entsprechenden aplatierten Flächen, das heisst die Teile, welche nicht beschichtet sind, können ebenfalls mit einem Laser aplatiert werden. Die Verwendung eines Lasers hat Insbesondere bei der Präzision der Herstellung der entsprechenden Kathoden und Anoden Vorteile.

Das vormontierte Element aus der Fig. 3A wird anschliessend in die Ausnehmung der Elektrodenschichten aus der Fig. 3B so eingeführt, dass der Ableiterstift 4 sich durch das gesamte Innenvolumen 3 des Gehäuseteils 2 erstreckt. Im Gehäuseboden des Gehäuseteils 2 ist eine ringförmige Vertiefung 12, welche der passgenauen Zentrierung des Ableiterstifts 4 dient. Eine präzise Positionierung ist allerdings auch leicht ohne dieses Merkmal möglich. Der Gehäuseboden ist im vorliegenden Beispiel konkav vorgespannt. So ergibt sich eine mechanische Vorspannung des Ableiterstifts 4 gegenüber dem Gehäusedeckel 9 über den Flansch 10 und den entsprechenden Dichtungsring 7. Mit dieser mechanischen Vorspannung ist eine langfristige Dichtigkeit der elektrochemischen Zelle bel minimalem Platzbedarf gewährleistet.

Der Verschluss der Batterie kann ebenfalls in der Glove Box oder im Trockenraum stattfinden. Bei der Einführung des Ableiterstifts wurden die Laschen der Kathodenschichten mechanisch vorgespannt. Die abschliessende gasdichte Verschweissung des Gehäusedeckels 9 mit dem Gehäuseteil 2 findet mit einer radialen Laserschweissung statt,

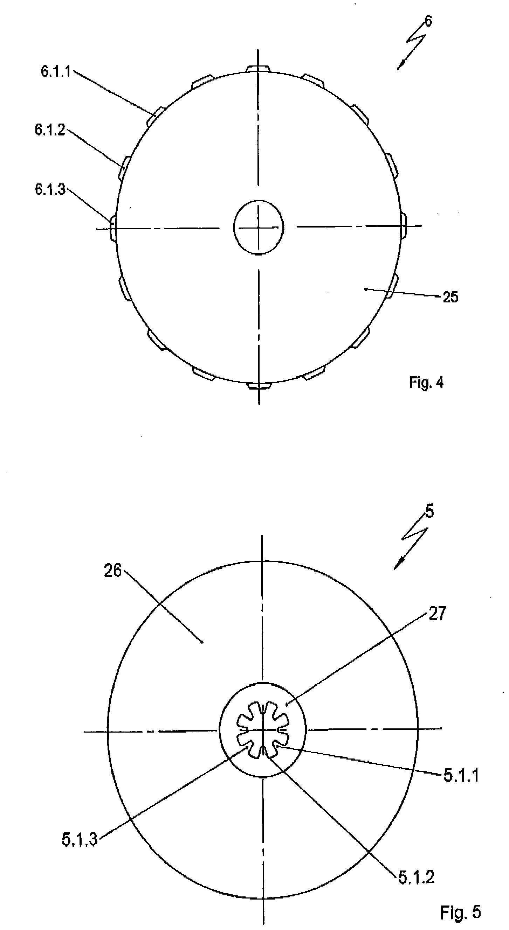

Die Laschen können einstückig auf dem gesamten Umfang der Elektrodenschichten, welche den jeweiligen Ableiter kontaktieren, ausgebildet sein. Alternativ können allerdings die Laschen auch als einzelne Laschen ausgebildet sein. Die Figur 4 zeigt zu diesem Zweck exemplarisch eine Anodenschicht mit einem beschichteten Teil 25 und aus dem Trägermaterial bestehenden aus diesem beschichteten Teil 25 hinausragenden Laschen 6.1, 6.1.2, 6.1.3 .... Bei der Montage reichen bereits diese Laschen aus, um eine ausreichende mechanische Vorspannung sicherzustellen, Im vorliegenden Beispiel sind sechzehn solcher Laschen gezeigt.

Alternativ können die Laschen als einzelner, durchgehender, den gesamten entsprechenden Umfang umfassenden Kreisring ausgebildet sein. Grundsätzlich reichen auch bereits zwei Laschen, um eine ausreichende mechanische Vorspannung sicherzustellen.

In der Fig. 5 ist ein analoges Beispiel mit einer Kathodenschicht 5 gezeigt. Die Kathodenschicht kontaktiert in diesem Beispiel den Ableiterstift. Aus diesem Grund ist der nicht beschichtete Teil 27, am inneren Umfang um die Ausnehmung Im Zentrum angeordnet. Der nicht beschichtete Teil 27 lässt sich wiederum weiter in ausgestülpte Laschen 5.1.1, 5,1.2, 5.1.3 unterteilen. Auch In diesem Beispiel ist die Anzahl der Laschen, nämlich acht, lediglich exemplarisch und ist bestimmt durch die Gesamtgrösse und die Anordnung der Batterie. Das Trägermaterial ist aus Aluminium.

In diesem Beispiel wurden die Einteilungen in Kathode und Anode und ihre jeweilige Kontaktierung lediglich als Beispiele dargestellt, und auch eine umgekehrte Anordnung, wobei die Anode den Ableiterstift kontaktiert und die Kathode das Gehäuseteil, ist ohne Nachteile ebenso denkbar.

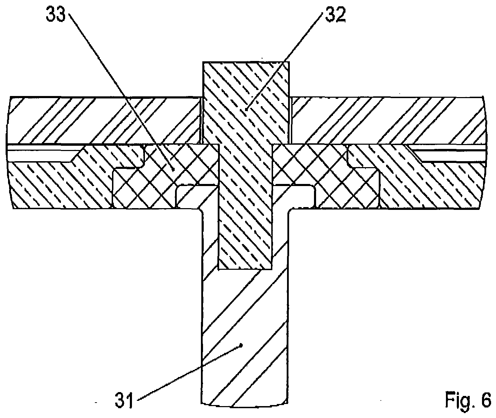

In der Figur 6 Ist eine besondere Ausführungsform dargestellt, bei der der Stift zweiteilig ausgestaltet ist. Im gezeigten Beispiel umfasst der Stift ein erstes Material, welches sich in das Innenvolumen der Zelle erstreckt und aus dem gleichen Material besteht wie das kontaktierte Trägermaterial, im vorliegenden Beispiel Aluminium, sowie ein zweites Material, welches in einem Vormontage-Schritt mit dem ersten Material formschlüssig verpresst wurde und aus vergoldetem Kupfer besteht. Das zweite Material ist lötfähig.

Mit der vorliegenden Erfindung ist eine elektrochemische Zelle bereitgestellt, die für Langzeitanwendungen geeignet ist. Besonders geeignet ist sie für Batterien mit besonders kleinen Bauhöhen ab 1,6 mm. Beispielhaft gezeigt ist in den Figuren und der detaillierten Beschreibung eine elektrochemische Zelle des Lithium-Ionen-Typs. Dabei ist dieses Beispiel lediglich zur detaillierten Illustration gezeigt und alternative lonen-Typen oder Elemente können verwendet werden, ohne sich dabei vom Wesen der Erfindung zu entfernen.

## Patentansprüche

1. Elektrochemische Zelle (1), insbesondere Knopfzelle, im geschichteten Elektrodenaufbau, wobei gegensätzlich gepolte Elektrodenschichten (5.1, 5.2, 5.3, ..., 6.1, 6.2, 6.3, ...) mit Separatorschichten (8.1, 8.2, 8.3, ...) physisch voneinander getrennt angeordnet sind, die Zelle weiter umfassend:
a) Ein erstes Gehäuseteil (2), welches ein Innenvolumen (3) definiert und so ausgestaltet ist, dass es zugleich einen Ableiter für einen ersten Elektrodenpol bildet;
b) Einen Stift (4), welcher sich von aussen in das Innenvolumen (3) erstreckt und so ausgestaltet ist, dass er einen Ableiter für einen zweiten Elektrodenpol bildet;
c) Eine Isolation (7), welche das erste Gehäuseteil (2) vom Stift (4) elektrisch isoliert, und wobei
die Zelle (1) **dadurch gekennzeichnet ist, dass**
an den Elektrodenschichten (5.1, 5.2, 5.3, ..., 6.1, 6.2, 6.3, ...) Laschen (5.1.1., 5.2.1, 5.3.1, ..., 6.1.1, 6.2.1, 6.3.1, ...) ausgebildet sind, welche die Flächenausdehnung des Innenvolumens überragen, insbesondere in Richtung des jeweiligen Ableiters überragen, wobei als die Flächenausdehnung des Innenvolumens die Flächenausdehnung verstanden wird, welche in der gleichen Ebene ist wie die Elektrodenschichten,
so dass die Elektrodenschichten (5.1, 5.2, 5.3, ..., 6.1, 6.2, 6.3, ...) im Innenvolumen (3) mit ihren entsprechenden Ableitern physischen Kontakt haben, dergestalt, dass die Laschen (5.1.1., 5.2.1, 5.3.1, ..., 6.1.1, 6.2.1, 6.3.1, ...) der Elektrodenschichten (5.1, 5.2, 5.3, ..., 6.1, 6.2, 6.3, ...) bezüglich dem entsprechenden Ableiter mechanisch vorgespannt sind.

2. Elektrochemische Zelle gemäss Anspruch 1, wobei die Elektrodenschichten (5.1, 5.2, 5.3, ..., 6.1, 6.2, 6.3, ...) eine Anode (6.1, 6.2, 6.3, ...) und eine Kathode (5.1, 5.2, 5.3, ...) umfassen, welche je mit einem Ableiter kontaktschlüssig verbunden sind.

3. Elektrochemische Zelle gemäss einem der Ansprüche 1 bis 2, wobei die Flächenausdehnung des Innenvolumens einen Innendurchmesser D der Zelle umfasst, und wobei eine erste Elektrodenschicht (5.1, 5.2, 5.3, ..., 6.1, 6.2, 6.3, ...) mit dem ersten Gehäuseteil als Ableiter physisch in Kontakt steht und besagte Elektrodenschicht (5.1, 5.2, 5.3, ..., 6.1, 6.2, 6.3, ...) einen Aussendurchmesser D_{L} aufweist, welcher um zwischen 0.02 bis 1.5 mm grösser ist als der Innendurchmesser D.

4. Elektrochemische Zelle gemäss Anspruch 3, wobei die Elektrodenschicht (5.1, 5.2, 5.3, ..., 6.1, 6.2, 6.3, ...) einen zweiten Durchmesser D_{B} aufweist, welcher um zwischen 0.05 bis 0.5 mm kleiner ist als der Innendurchmesser D.

5. Elektrochemische Zelle gemäss einem der Ansprüche 1 bis 4, wobei der Stift (4) als zentraler Ableiterschaft ausgestaltet ist und so ausgestaltet ist, dass er sich durch Ausnehmungen sämtlicher Elektrodenschichten (5.1, 5.2, 5.3, ..., 6.1, 6.2, 6.3, ...) des gesamten Innenvolumens erstreckt.

6. Elektrochemische Zelle gemäss einem der Ansprüche 1 bis 5, wobei eine erste Elektrodenschicht (5.1, 5.2, 5.3, ..., 6.1, 6.2, 6.3, ...) eine erste Ausnehmung umfasst, durch welche sich der Stift (4)erstreckt und wobei die erste Ausnehmung einen ersten Durchmesser aufweist, insbesondere wobei die erste Ausnehmung einen ersten Durchmesser aufweist, der um zwischen 0.2 und 1.6 mm grösser ist als der Aussendurchmesser des Stiftes (4).

7. Elektrochemische Zelle gemäss einem der Ansprüche 1 bis 6, wobei eine zweite Elektrodenschicht (5.1, 5.2, 5.3, ..., 6.1, 6.2, 6.3, ...) mit dem Stift (4) als Ableiter physisch in Kontakt steht und besagte zweite Elektrodenschicht (5.1, 5.2, 5.3, ..., 6.1, 6.2, 6.3, ...) eine zweite Ausnehmung umfasst, durch welche sich der Stift (4) erstreckt und wobei die zweite Ausnehmung einen zweiten Durchmesser aufweist, insbesondere wobei die zweite Ausnehmung einen zweiten Druchmesser aufweist, der um zwischen 0.025 und 3 mm kleiner ist als der Aussendurchmesser des Stiftes (4).

8. Elektrochemische Zelle (1) gemäss Anspruch 7, wobei durch einen Unterschied zwischen dem Durchmesser der zweiten Ausnehmung und des Stiftes (4) eine Lasche (5.1.1, 5.2.1, 5.3.1, ..., 6.1.1, 6.2.1, 6.3.1, ...) an der zweiten Elektrodenschicht ausgebildet ist, durch welche die zweite Elektrodenschicht (5.1, 5.2, 5.3, ..., 6.1, 6.2, 6.3, ...) einen elektrisch leitenden Kontakt mit dem Stift (4) aufweist.

9. Elektrochemische Zelle gemäss einem der Ansprüche 1 bis 8, wobei eine Elektrodenschicht (5.1, 5.2, 5.3, ..., 6.1, 6.2, 6.3, ...) von einer Separatorschicht (8.1, 8.2, 8.3, ...) im Wesentlichen umschlossen ist, insbesondere eine Kathodenschicht zwischen zwei miteinander verschweissten Separatorschichten (8.1, 8.2, 8.3, ...) angeordnet ist, weiter insbesondere sind zwei Separatorschichten (8.1, 8.2, 8.3, ...) nur auf einer Lasche (5.1.1, 5.2.1, 5.3.1, ..., 6.1.1, 6.2.1, 6.3.1, ...) zur physischen Kontakierung des Ableiters gegenüberliegenden Seite dergestalt miteinander verschweisst, dass Sie eine Elektrodenschicht (5.1, 5.2, 5.3, ..., 6.1, 6.2, 6.3, ...) im Wesentlichen umgeben.

10. Elektrochemische Zelle gemäss einem der Ansprüche 1 bis 9, wobei die Elektrodenschichten (5.1, 5.2, 5.3, ..., 6.1, 6.2, 6.3, ...) im Gehäuseteil so angeordnet sind, dass sie eine mechanische Vorspannung bezüglich ihrer jeweiligen Ableiter aufweisen.

11. Elektrochemische Zelle gemäss einem der Ansprüche 1 bis 10, weiter umfassend:
d) Einen Gehäusedeckel (9) mit einer Ausnehmung zur Aufnahme des Stiftes (4), so dass letzterer sich von aussen in das Innenvolumen (3) der elektrochemischen Zelle erstrecken kann, und
e) Mindestens eine Dichtung (7) zwischen dem Gehäuseteil und dem Gehäusedeckel und/oder dem Gehäusedeckel und dem Stift (4), welche die elektrochemische Zelle gegen aussen versiegelt.

12. Elektrochemische Zelle gemäss Anspruch 11, wobei der Stift (4) einen Flansch (10) umfasst und die Ausnehmung des Gehäusedeckels (9) so ausgestaltet ist, dass zwischen dem Flansch (10) des Stiftes (4) und dem Gehäusedeckel (9) ein Formschluss besteht.

13. Elektrochemische Zelle gemäss einem der Ansprüche 11 oder 12, wobei ein dem Gehäusedeckel gegenüber angeordneter Gehäuseboden (11) des Gehäuseteils (2) konkav ausgebildet ist.

14. Elektrochemische Zelle gemäss einem der Ansprüche 1 bis 13, weiter umfassend:
f) Einen Vliesstoff (16) zur Aufrechterhaltung einer mechanischen Vorspannung im Innenvolumen der elektrochemischen Zelle, und insbesondere zur Isolation der Elektrodenschichten (5.1, 5.2, 5.3, ..., 6.1, 6.2, 6.3, ...) gegenüber einem Gehäuseboden (11) der elektrochemischen Zelle.

15. Elektrochemische Zelle gemäss einem der Ansprüche 1 bis 14, wobei Ableiterfahnen (14.1, 14.1, 15) auf einer Aussenseite der Zelle vorgesehen sind, die aus lötfähigem Material ausgebildet sind.

16. Verfahren zur Herstellung einer elektrochemischen Zelle, insbesondere einer elektrochemischen Zelle gemäss einem der Ansprüche 1 bis 15, umfassend die Schritte:
a) Abwechselndes Einlegen gegensätzlich gepolter Elektrodenschichten (5.1, 5.2, 5.3, ..., 6.1, 6.2, 6.3, ...) in ein erstes Gehäuseteil (2), welches ein Innenvolumen der elektrochemischen Zelle definiert;
b) Vorspannen einer ersten Elektrodenschicht (5.1, 5.2, 5.3, ..., 6.1, 6.2, 6.3, ...) hinsichtlich der Innenwand (17) des ersten Gehäuseteils (2), dadurch dass der Durchmesser dieser Elektrodenschicht (5.1, 5.2, 5.3, ..., 6.1, 6.2, 6.3, ...) grösser ist, als der Innendurchmesser des ersten Gehäuseteils;
c) Einfüllen eines Elektrolytmediums;
d) Verschluss der elektrochemischen Zelle mit einem Gehäusedeckel, wobei ein Stift (4) sich durch den Gehäusedeckel (9) in das Innenvolumen (3) der elektrochemischen Zelle erstreckt, dergestalt, dass eine Vorspannung zwischen diesem Stift (4) und einer zweiten Elektrodenschicht (5.1, 5.2, 5.3, ..., 6.1, 6.2, 6.3, ...) entsteht, insbesondere indem letztere eine Ausnehmung zur Aufnahme des Stiftes (4) aufweist, deren Durchmesser kleiner ist als der Aussendurchmesser des Stiftes (4).

17. Verfahren zur Herstellung einer elektrochemischen Zelle gemäss Anspruch 16, wobei an den Elektrodenschichten (5.1, 5.2, 5.3, ..., 6.1, 6.2, 6.3, ...) Laschen (5.1.1, 5.2.1, 5.3.1, ..., 6.1.1, 6.2.1, 6.3.1, ...) ausgebildet sind zum Vorspannen der Elektrodenschichten hinsichtlich ihrer jeweiligen Ableiter gemäss den Schritten b) und d).

18. Verfahren gemäss einem der Ansprüche 16 oder 17, wobei die Elektrodenschichten (5.1, 5.2, 5.3, ..., 6.1, 6.2, 6.3, ...) aus Kathoden- (5.1, 5.2, 5.3, ...) und Anodenschichten (6.1, 6.2, 6.3, ...) gebildet werden und eine Kathoden- und/oder Anodenschicht vorgängig zwischen zwei Separatorschichten (8.1, 8.2, 8.3, ...) eingelegt wird und die Separatorschichten an mindestens einer Stelle, insbesondere an einer Mehrzahl von Stellen, stoffschlüssig verbunden, insbesondere verschweisst, werden.

19. Verfahren gemäss einem der Ansprüche 16 bis 18, weiter umfassend den folgenden Schritt: Vormontage des Gehäusedeckels (9) und des Stiftes (4), indem ein mit einer Dichtungsmasse beschichteter Dichtungsring an einer Ausnehmung des Gehäusedeckels eingepresst wird und der Stift (4) durch die Ausnehmung geführt wird, so dass er mit einem Flansch an den Dichtungsring angepresst wird.

20. Verfahren gemäss einem der Ansprüche 16 bis 19, weiter umfassend den Schritt: Einlegen eines Vliesstoffes (16) in das erste Gehäuseteil (2).

21. Verwendung einer elektrochemischen Zelle gemäss Anspruch 1 als Batterie in einem Hörgerät, wobei die elektrochemische Zelle direkt auf einer Platine (20) angebracht ist.

22. Verwendung einer elektrochemischen Zelle gemäss Anspruch 1 als Batterie in einem Implantat, insbesondere einem Herzschrittmacher.

23. Platine (20), umfassend mindestens eine Zelle gemäss Anspruch 1 als Energieträger.

## Claims

1. Electrochemical cell (1), in particular a button cell, of a layered electrode structure, oppositely poled electrode layers (5.1, 5.2, 5.3, ..., 6.1, 6.2, 6.3, ...) being arranged such that they are physically separated from one another by separator layers (8.1, 8.2, 8.3, ...), the cell also comprising:
a) a first housing part (2), which defines an interior volume (3) and is designed in such a way that at the same time it forms an output conductor for a first electrode pole;
b) a pin (4), which extends from the outside into the interior volume (3) and is designed in such a way that it forms an output conductor for a second electrode pole;
c) an insulation (7), which insulates the first housing part (2) electrically from the pin (4), and
the cell (1) being **characterized in that**
tabs (5.1.1, 5.2.1, 5.3.1, ..., 6.1.1, 6.2.1, 6.3.1, ...) which protrude beyond the areal extent of the interior volume, in particular in the direction of the respective output conductor, are formed on the electrode layers (5.1, 5.2, 5.3, ..., 6.1, 6.2, 6.3, ...), wherein the areal extent of the interior volume should be understood as meaning the areal extent that is in the same plane as the electrode layers,
such that the electrode layers (5.1, 5.2, 5.3, ..., 6.1, 6.2, 6.3, ...) in the interior volume (3) are in physical contact with their corresponding output conductors in such a way that there is a mechanical tensioning between the electrode layers (5.1, 5.2, 5.3, ..., 6.1, 6.2, 6.3, ...) and the corresponding output conductor.

2. Electrochemical cell according to claim 1, the electrode layers (5.1, 5.2, 5.3, ..., 6.1, 6.2, 6.3, ...) comprising an anode (6.1, 6.2, 6.3, ...) and a cathode (5.1, 5.2, 5.3, ...), which are each connected in a contact-bonded manner to an output conductor.

3. Electrochemical cell according to one of claims 1 to 2, the areal extent of the interior volume comprising an inside diameter D of the cell, and a first electrode layer (5.1, 5.2, 5.3, ..., 6.1, 6.2, 6.3, ...) being in physical contact with the first housing part as an output conductor and said electrode layer (5.1, 5.2, 5.3, ..., 6.1, 6.2, 6.3, ...) having an outside diameter D_{L}, which is greater than the inside diameter D by between 0.02 and 1.5 mm.

4. Electrochemical cell according to claim 3, the electrode layer (5.1, 5.2, 5.3, ..., 6.1, 6.2, 6.3, ...) having a second diameter D_{B}, which is smaller than the inside diameter D by between 0.05 and 0.5 mm.

5. Electrochemical cell according to one of claims 1 to 4, the pin (4) being designed as a central output conductor shaft and designed in such a way that it extends through clearances in all the electrode layers (5.1, 5.2, 5.3, ..., 6.1, 6.2, 6.3, ...) of the entire interior volume.

6. Electrochemical cell according to one of claims 1 to 5, a first electrode layer (5.1, 5.2, 5.3, ..., 6.1, 6.2, 6.3, ...) comprising a first clearance, through which the pin (4) extends, and the first clearance having a first diameter, in particular the first clearance having a first diameter that is greater than the outside diameter of the pin (4) by between 0.2 and 1.6 mm.

7. Electrochemical cell according to one of claims 1 to 6, a second electrode layer (5.1, 5.2, 5.3, ..., 6.1, 6.2, 6.3, ...) being in physical contact with the pin (4) as an output conductor and said second electrode layer (5.1, 5.2, 5.3, ..., 6.1, 6.2, 6.3, ...) comprising a second clearance, through which the pin (4) extends, and the second clearance having a second diameter, in particular the second clearance having a second diameter that is smaller than the outside diameter of the pin (4) by between 0.025 and 3 mm.

8. Electrochemical cell (1) according to claim 7, a difference between the diameter of the second clearance and the pin (4) having the effect of forming on the second electrode layer a tab (5.1.1, 5.2.1, 5.3.1, ..., 6.1.1, 6.2.1, 6.3.1, ...) by which the second electrode layer (5.1, 5.2, 5.3, ..., 6.1, 6.2, 6.3, ...) has an electrically conducting contact with the pin (4).

9. Electrochemical cell according to one of claims 1 to 8, an electrode layer (5.1, 5.2, 5.3, ..., 6.1, 6.2, 6.3, ...) being substantially enclosed by a separator layer (8.1, 8.2, 8.3, ...), in particular a cathode layer being arranged between two separator layers (8.1, 8.2, 8.3, ...) welded to one another, more particularly two separator layers (8.1, 8.2, 8.3, ...) just on one tab (5.1.1, 5.2.1, 5.3.1, ..., 6.1.1, 6.2.1, 6.3.1, ...) for the physical contacting of the output conductor of the opposite side being welded to one another in such a way that they substantially surround an electrode layer (5.1, 5.2, 5.3, ..., 6.1, 6.2, 6.3, ...).

10. Electrochemical cell according to one of claims 1 to 9, the electrode layers (5.1, 5.2, 5.3, ..., 6.1, 6.2, 6.3, ...) being arranged in the housing part in such a way that they have a mechanical pretensioning with respect to their respective output conductor.

11. Electrochemical cell according to one of claims 1 to 10, also comprising:
d) a housing cover (9) with a clearance for receiving the pin (4), so that the latter can extend from the outside into the interior volume (3) of the electrochemical cell, and
e) at least one seal (7) between the housing part and the housing cover and/or the housing cover and the pin (4), which seal seals the electrochemical cell from the outside.

12. Electrochemical cell according to claim 11, the pin (4) comprising a flange (10) and the clearance in the housing cover (9) being designed in such a way that there is a form fit between the flange (10) of the pin (4) and the housing cover (9).

13. Electrochemical cell according to either of claims 11 and 12, a housing base (11) of the housing part (2) that is arranged opposite from the housing cover being of a concave form.

14. Electrochemical cell according to one of claims 1 to 13, also comprising:
f) a nonwoven material (16) for maintaining a mechanical pretensioning in the interior volume of the electrochemical cell, and in particular for insulating the electrode layers (5.1, 5.2, 5.3, ..., 6.1, 6.2, 6.3, ...) with respect to a housing base (11) of the electrochemical cell.

15. Electrochemical cell according to one of claims 1 to 14, output conductor lugs (14.1, 14.1, 15), which are formed from solderable material, being provided on an outer side of the cell.

16. Method for producing an electrochemical cell, in particular an electrochemical cell according to one of claims 1 to 15, comprising the steps of:
a) alternately placing oppositely poled electrode layers (5.1, 5.2, 5.3, ..., 6.1, 6.2, 6.3, ...) in a first housing part (2), which defines an interior volume of the electrochemical cell;
b) pretensioning a first electrode layer (5.1, 5.2, 5.3, ..., 6.1, 6.2, 6.3, ...) with regard to the inner wall (17) of the first housing part (2), by the diameter of this electrode layer (5.1, 5.2, 5.3, ..., 6.1, 6.2, 6.3, ...) being greater than the inside diameter of the first housing part;
c) filling with an electrolyte medium;
d) closing the electrochemical cell with a housing cover, a pin (4) extending through the housing cover (9) into the interior volume (3) of the electrochemical cell in such a way that a pretensioning is produced between this pin (4) and a second electrode layer (5.1, 5.2, 5.3, ..., 6.1, 6.2, 6.3, ...), in particular in that the latter has a clearance for receiving the pin (4), the diameter of which is smaller than the outside diameter of the pin (4).

17. Method for producing an electrochemical cell according to claim 16, tabs (5.1.1, 5.2.1, 5.3.1, ..., 6.1.1, 6.2.1, 6.3.1, ...) being formed on the electrode layers (5.1, 5.2, 5.3, ..., 6.1, 6.2, 6.3, ...) for pretensioning the electrode layers with regard to their respective output conductor according to steps b) and d).

18. Method according to either of claims 16 and 17, the electrode layers (5.1, 5.2, 5.3, ..., 6.1, 6.2, 6.3, ...) being formed by cathode layers (5.1, 5.2, 5.3, ...) and anode layers (6.1, 6.2, 6.3, ...) and a cathode layer and/or anode layer being previously placed between two separator layers (8.1, 8.2, 8.3, ...) and the separator layers being connected in a material-bonded manner, in particular welded, at at least one location, in particular at a plurality of locations.

19. Method according to one of claims 16 to 18, also comprising the following step: preassembly of the housing cover (9) and the pin (4), in that a sealing ring coated with a sealing compound is pressed in at a clearance in the housing cover and the pin (4) is led through the clearance, so that it is pressed with a flange against the sealing ring.

20. Method according to one of claims 16 to 19, also comprising the step of: placing a nonwoven material (16) in the first housing part (2).

21. Use of an electrochemical cell according to claim 1 as a battery in a hearing aid, the electrochemical cell being mounted directly on a circuit board (20).

22. Use of an electrochemical cell according to claim 1 as a battery in an implant, in particular a cardiac pacemaker.

23. Circuit board (20), comprising at least one cell according to claim 1 as an energy source.

## Revendications

1. Cellule électrochimique (1), en particulier pile bouton, à structure d'électrodes en couches, dans laquelle des couches d'électrodes (5.1, 5.2, 5.3, ..., 6.1, 6.2, 6.3, ...) polarisées de manière opposée sont disposées de manière physiquement séparées les unes des autres avec des couches de séparateur (8.1, 8.2, 8.3, ...), la cellule comprenant en outre :
a) une première partie de boîtier (2) qui définit un volume intérieur (3) et est réalisée de manière à simultanément former un conducteur pour un premier pôle d'électrode ;
b) une tige (4) qui s'étend depuis l'extérieur dans le volume intérieur (3) et est réalisée de manière à former un conducteur pour un deuxième pôle d'électrode ;
c) une isolation (7) qui isole électriquement la première partie de boîtier (2) de la tige (4), et dans laquelle
la cellule (1) est **caractérisée en ce que**
des languettes (5.1.1, 5.2.1, 5.3.1, ..., 6.1.1, 6.2.1, 6.3.1, ...) sont formées au niveau des couches d'électrodes (5.1, 5.2, 5.3, ..., 6.1, 6.2, 6.3, ...), lesquelles languettes font saillie par rapport à l'extension surfacique du volume intérieur, en particulier en direction du conducteur respectif, dans laquelle on entend par extension surfacique du volume intérieur, l'extension surfacique qui est dans le même plan que les couches d'électrodes,
de sorte que les couches d'électrodes (5.1, 5.2, 5.3, ..., 6.1, 6.2, 6.3, ...) ont un contact physique dans le volume intérieur (3) avec leurs conducteurs correspondants de manière à ce que les languettes (5.1.1, 5.2.1, 5.3.1, ..., 6.1.1, 6.2.1, 6.3.1, ...) des couches d'électrodes (5.1, 5.2, 5.3, ..., 6.1, 6.2, 6.3, ...) sont précontraintes mécaniquement par rapport au conducteur correspondant.

2. Cellule électrochimique selon la revendication 1, dans laquelle les couches d'électrodes (5.1, 5.2, 5.3, ..., 6.1, 6.2, 6.3, ...) comprennent une anode (6.1, 6.2, 6.3, ...) et une cathode (5.1, 5.2, 5.3, ...) qui sont respectivement reliées par fermeture de contact à un conducteur.

3. Cellule électrochimique selon l'une des revendications 1 à 2, dans laquelle l'extension surfacique du volume intérieur comprend un diamètre intérieur D de la cellule, et dans laquelle une première couche d'électrode (5.1, 5.2, 5.3, ..., 6.1, 6.2, 6.3, ...) est en contact physique avec la première partie de boîtier en tant que conducteur et ladite couche d'électrode (5.1, 5.2, 5.3, ..., 6.1, 6.2, 6.3, ...) présente un diamètre extérieur D_{L} qui est supérieur de l'ordre compris entre 0,02 à 1,5 mm au diamètre intérieur D.

4. Cellule électrochimique selon la revendication 3, dans laquelle la couche d'électrode (5.1, 5.2, 5.3, ..., 6.1, 6.2, 6.3, ...) présente un deuxième diamètre D_{B}, lequel est inférieur de l'ordre compris entre 0,05 à 0,5 mm au diamètre intérieur D.

5. Cellule électrochimique selon l'une des revendications 1 à 4, dans laquelle la tige (4) est réalisée en tant que tige centrale de conducteur et est réalisée de manière à s'étendre à travers des évidements de l'ensemble des couches d'électrodes (5.1, 5.2, 5.3, ..., 6.1, 6.2, 6.3, ...) de l'ensemble du volume intérieur.

6. Cellule électrochimique selon l'une des revendications 1 à 5, dans laquelle une première couche d'électrode (5.1, 5.2, 5.3, ..., 6.1, 6.2, 6.3, ...) comprend un premier évidement à travers lequel la tige (4) s'étend et dans laquelle le premier évidement présente un premier diamètre, en particulier dans laquelle le premier évidement présente un premier diamètre supérieur de l'ordre compris entre 0,2 et 1,6 mm au diamètre extérieur de la tige (4) .

7. Cellule électrochimique selon l'une des revendications 1 à 6, dans laquelle une deuxième couche d'électrode (5.1, 5.2, 5.3, ..., 6.1, 6.2, 6.3, ...) est en contact physique avec la tige (4) en tant que conducteur et ladite deuxième couche d'électrode (5.1, 5.2, 5.3, ..., 6.1, 6.2, 6.3, ...) comprend un deuxième évidement à travers lequel la tige (4) s'étend et dans laquelle le deuxième évidement présente un deuxième diamètre, en particulier dans laquelle le deuxième évidement présente un deuxième diamètre inférieur de l'ordre compris entre 0,025 et 3 mm au diamètre extérieur de la tige (4).

8. Cellule électrochimique (1) selon la revendication 7, dans laquelle, grâce à une différence entre le diamètre du deuxième évidement et de la tige (4), une languette (5.1.1, 5.2.1, 5.3.1, ..., 6.1.1, 6.2.1, 6.3.1, ...) est formée au niveau de la deuxième couche d'électrode grâce à laquelle la deuxième couche d'électrode (5.1, 5.2, 5.3, ..., 6.1, 6.2, 6.3, ...) présente un contact électroconducteur avec la tige (4) .

9. Cellule électrochimique selon l'une des revendications 1 à 8, dans laquelle une couche d'électrode (5.1, 5.2, 5.3, ..., 6.1, 6.2, 6.3, ...) est sensiblement entourée par une couche de séparateur (8.1, 8.2, 8.3, ...), en particulier une couche de cathode est disposée entre deux couches de séparateur (8.1, 8.2, 8.3, ...) soudées l'une à l'autre, également en particulier deux couches de séparateur (8.1, 8.2, 8.3, ...) sont soudées l'une à l'autre seulement sur une languette (5.1.1, 5.2.1, 5.3.1, ..., 6.1.1, 6.2.1, 6.3.1, ...) pour la mise en contact physique du côté situé en vis-à-vis du conducteur de manière à ce qu'elles entourent sensiblement une couche d'électrode (5.1, 5.2, 5.3, ..., 6.1, 6.2, 6.3, ...).

10. Cellule électrochimique selon l'une des revendications 1 à 9, dans laquelle les couches d'électrodes (5.1, 5.2, 5.3, ..., 6.1, 6.2, 6.3, ...) sont disposées dans la partie de boîtier de manière à ce qu'elles présentent une précontrainte mécanique par rapport à leurs conducteurs respectifs.

11. Cellule électrochimique selon l'une des revendications 1 à 10, comprenant en outre :
d) un couvercle de boîtier (9) avec un évidement pour la réception de la tige (4) de sorte que cette dernière puisse s'étendre depuis l'extérieur dans le volume intérieur (3) de la cellule électrochimique, et
e) au moins un joint d'étanchéité (7) entre la partie de boîtier et le couvercle de boîtier et/ou le couvercle de boîtier et la tige (4), lequel colmate la cellule électrochimique par rapport à l'extérieur.

12. Cellule électrochimique selon la revendication 11, dans laquelle la tige (4) comprend une bride (10) et l'évidement du couvercle de boîtier (9) est réalisé de manière à ce qu'une fermeture par conjugaison de formes existe entre la bride (10) de la tige (4) et le couvercle de boîtier (9).

13. Cellule électrochimique selon l'une des revendications 11 ou 12, dans laquelle un fond de boîtier (11) de la partie de boîtier (2) disposé en vis-à-vis du couvercle de boîtier est réalisé de manière concave.

14. Cellule électrochimique selon l'une des revendications 1 à 13, comprenant en outre :
f) un non-tissé (16) pour le maintien d'une précontrainte mécanique dans le volume intérieur de la cellule électrochimique, et en particulier pour l'isolation des couches d'électrodes (5.1, 5.2, 5.3, ..., 6.1, 6.2, 6.3, ...) par rapport à un fond de boîtier (11) de la cellule électrochimique.

15. Cellule électrochimique selon l'une des revendications 1 à 4, dans laquelle des cosses de conducteur (14.1, 14.1, 15) sont prévues sur un côté extérieur de la cellule, lesquelles sont réalisées en un matériau se prêtant au brasage.

16. Procédé pour la fabrication d'une cellule électrochimique, en particulier d'une cellule électrochimique selon l'une des revendications 1 à 15, comprenant les étapes suivantes :
a) la mise en place, tour à tour, de couches d'électrodes (5.1, 5.2, 5.3, ..., 6.1, 6.2, 6.3, ...) polarisées de manière opposée dans une première partie de boîtier (2) qui définit un volume intérieur de la cellule électrochimique ;
b) la précontrainte d'une première couche d'électrode (5.1, 5.2, 5.3, ..., 6.1, 6.2, 6.3, ...) par rapport à la paroi intérieure (17) de la première partie de boîtier (2) en ce que le diamètre de cette couche d'électrode (5.1, 5.2, 5.3, ..., 6.1, 6.2, 6.3, ...) est supérieur au diamètre intérieur de la première partie de boîtier ;
c) le remplissage avec un milieu électrolytique ;
d) la fermeture de la cellule électrochimique avec un couvercle de boîtier, dans lequel une tige (4) s'étend à travers le couvercle de boîtier (9) dans le volume intérieur (3) de la cellule électrochimique de manière à ce qu'une précontrainte s'établit entre cette tige (4) et une deuxième couche d'électrode (5.1, 5.2, 5.3, ..., 6.1, 6.2, 6.3, ...) en particulier en ce que cette dernière présente un évidement pour la réception de la tige (4), dont le diamètre est inférieur au diamètre extérieur de la tige (4).

17. Procédé pour la fabrication d'une cellule électrochimique selon la revendication 16, dans lequel des languettes (5.1.1, 5.2.1, 5.3.1, ..., 6.1.1, 6.2.1, 6.3.1, ...) sont formées au niveau des couches d'électrodes (5.1, 5.2, 5.3, ..., 6.1, 6.2, 6.3, ...) pour la précontrainte des couches d'électrodes par rapport à leurs conducteurs respectifs selon les étapes b) et d).

18. Procédé selon l'une des revendications 16 ou 17, dans lequel les couches d'électrodes (5.1, 5.2, 5.3, ..., 6.1, 6.2, 6.3, ...) sont formées par des couches de cathode (5.1, 5.2, 5.3, ...) et d'anode (6.1, 6.2, 6.3, ...) et une couche de cathode et/ou d'anode est préalablement mise en place entre deux couches de séparateur (8.1, 8.2, 8.3, ...) et les couches de séparateur sont liées par conjugaison de matières, en particulier soudées, à au moins un endroit, en particulier à une pluralité d'endroits.

19. Procédé selon l'une des revendications 16 à 18, comprenant en outre l'étape suivante : le montage préalable du couvercle de boîtier (9) et de la tige (4) en ce qu'une bague d'étanchéité revêtue d'un matériau d'étanchéification est pressée dans un évidement du couvercle de boîtier et que la tige (4) est menée à travers l'évidement de sorte qu'elle est pressée avec une bride contre la bague d'étanchéité.

20. Procédé selon l'une des revendications 16 à 19, comprenant en outre l'étape suivante : la mise en place d'un non-tissé (16) dans la première partie de boîtier (2).

21. Utilisation d'une cellule électrochimique selon la revendication 1 en tant que pile dans un appareil auditif, dans laquelle la cellule électrochimique est apposée directement sur une platine (20).

22. Utilisation d'une cellule électrochimique selon la revendication 1 en tant que pile dans un implant, en particulier un stimulateur cardiaque.

23. Platine (20) comprenant au moins une cellule selon la revendication 1 en tant que source d'énergie.
